# EUROPEAN PATENT SPECIFICATION

(11) **EP 4 612 894 B1**
(45) Date of publication and mention of the grant of the patent: **15.07.2026**
(21) Application number: 23818606.8
(22) Date of filing: 03.11.2023
(51) Int. Cl.: H04L 67/10

(54) **ENHANCEMENT OF DISCOVERY AND PC5 CONNECTION FOR PC5 BASED AI/ML**
VERBESSERUNG DER ENTDECKUNG UND PC5-VERBINDUNG FÜR PC5-BASIERTES AI/ML
AMÉLIORATION DE DÉCOUVERTE ET DE CONNEXION PC5 POUR AI/ML SUR PC5

(30) Priority: 03.11.2022 US 202263422298 P; 08.09.2023 US 202363537332 P
(43) Date of publication of application: 10.09.2025
(73) Proprietor: InterDigital Patent Holdings, Inc., Wilmington, DE 19809 (US)
(72) Inventor: SON, Jung Je, Conshohocken, PA 19428 (US); WANG, Guanzhou, Montreal, Québec H3A 3G4 (CA); OLVERA-HERNANDEZ, Ulises, Montreal, Québec H3A 3G4 (CA); KHEIRKHAH, Morteza, London NW11 8DJ (GB); METHENNI, Achref, Montreal, Québec H3A 3G4 (CA); WANG, Zhibi, Woodridge, IL 60517 (US)
(74) Representative: AWA Sweden AB
(86) International application number: PCT/US2023/078669
(87) International publication number: WO 2024/097983

(56) References cited:
- CN-A- 114 788 323
- OPPO: "WID on study on enhanced 5G functionalities for application AI/ML services", vol. SA WG1, no. Electronic Meeting; 20211111 - 20211118, 29 October 2021 (2021-10-29), XP052072572, Retrieved from the Internet <URL:https://ftp.3gpp.org/tsg_sa/WG1_Serv/TSGS1_96e_EM_Nov2021/Docs/S1-214039.zip S1-214039 SID on enhanced 5G functionalities for application AIML services.docx> [retrieved on 20211029]

## Description

### CROSS-REFERENCE TO RELATED APPLICATIONS

This application claims the benefit of U.S. Provisional Application No. 63/422,298 filed November 3, 2022 and U.S. Provisional Application No. 63/537,332 filed September 8, 2023.

### SUMMARY

Document OPPO: "WID on study on enhanced 5G functionalities for application Al/ML services",,vol. SA WG1, no. Electronic Meeting; 20211111 - 20211118 29 October 2021 discusses aspects pertaining to the need for PC5 support for AI/ML in 5g networks.

Enhancement of discovery and PC5 connection for PC5 based Al/ML is described herein. As will be described in greater detail below, a WTRU performs ProSe discovery of other WTRUs supporting PC5 based AI/ML splitting while considering supported AI/ML operation, the WTRU's capability. ProSe Discovery Code may be enhanced to include a supported Al/ML model for the application using PC5 based AI/ML. The WTRU's capability information or class information of the WTRU's capability may be included for Discovery. Some of the capability information may be negotiated during or after PC5 Connection setup as alternative.

Dynamic WTRU configuration for Local AI/ML service is described herein. As will be described in greater detail below, based on the WTRU's location, when there is any local Al/ML service with or without supporting PC5 based AI/ML operation, the 5GS configuration may inform the configuration parameter of local AI/ML service, such as application server information and configuration parameter of PC5 based AI/ML and discover code for PC5 based AI/ML service, for example.

Dynamic AI/ML splitting negotiation between a WTRU and a AF with consideration of the availability of PC5 based Al/ML and Server based AI/ML is described herein. As will be described in greater detail below, the WTRU and Al/ML Application server negotiate the Al/ML splitting point with expected performance of PC5 based AI/ML and communication performance analytic information. AI/ML An application server or 5GS may trigger discovery procedure for PC5 based AI/ML service and ask report of expected performance of PC5 based Al/ML.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 illustrates a reference model of a potential architecture of 5G or NextGen network;
FIG. 3 illustrates a PC5 based Al/ML operation splitting according to certain examples;
FIG. 4 illustrates a model A based Discovery and PC5 connection setup for PC5 based AI/ML;
FIG. 5 illustrates a Model B based Discovery and PC5 connection setup for PC5 based AI/ML;
FIG. 6 illustrates a method for enhancement of discovery and PC5 connection for PC5 based AI/ML;
FIG. 7 illustrates a WTRU configuration Update procedure for PC5 based Al/ML;
FIG. 8 illustrates configuration for local AI/ML and PC5 based AI/ML during PDU session setup;
FIG. 9 illustrates a method of dynamic WTRU configuration for Local AI/ML service;
FIG. 10 illustrates an AI/ML Splitting negotiation with network analytics;
FIG. 11 illustrates an AI/ML Splitting negotiation with availability report for PC5 based AI/ML;
FIG. 12 illustrates a method for dynamic Al/ML splitting negotiation between a WTRU and a AF considering availability of PC5 based AI/ML and Server based Al/M;
FIG. 13 illustrates a two-stage AI/ML Splitting process example;
FIG. 14 illustrates an AI/ML Splitting complementary Splitting procedure; and
FIG. 15 illustrates AI/ML Splitting complementary Splitting procedure Enhanced with aggregate information.

### DETAILED DESCRIPTION

Enhancement of discovery and PC5 connection for PC5 based AI/ML is described herein. As will be described in greater detail below, a WTRU performs ProSe discovery of other WTRUs supporting PC5 based AI/ML splitting while considering supported AI/ML operation, the WTRU's capability. ProSe Discovery Code may be enhanced to include a supported Al/ML model for the application using PC5 based AI/ML. The WTRU's capability information or class information of the WTRU's capability may be included for Discovery. Some of the capability information may be negotiated during or after PC5 Connection setup as alternative.

Dynamic WTRU configuration for Local AI/ML service is described herein. As will be described in greater detail below, based on the WTRU's location, when there is any local Al/ML service with or without supporting PC5 based AI/ML operation, the 5GS configuration may inform the configuration parameter of local AI/ML service, such as application server information and configuration parameter of PC5 based AI/ML and discover code for PC5 based AI/ML service, for example.

Dynamic AI/ML splitting negotiation between a WTRU and a AF with consideration of the availability of PC5 based Al/ML and Server based AI/ML is described herein. As will be described in greater detail below, the WTRU and Al/ML Application server negotiate the AI/ML splitting point with expected performance of PC5 based AI/ML and communication performance analytic information. AI/ML An application server or 5GS may trigger discovery procedure for PC5 based Al/ML service and ask report of expected performance of PC5 based Al/ML.

A system, wireless transmit and receive unit (WTRU, and method for PC5 based Al/ML are described. The method includes transmitting a discovery solicitation message, the discovery solicitation message including a discovery code for PC5 based AI/ML and a requested AI/ML model and performance class for AI/ML, receiving a discovery response message, the discovery response message including an identification of the AI/ML model, the performance class and target user information, configuring a PC5 connection based on the discovery response message, and negotiating a PC5 based AI/ML split. The discovery solicitation message may allow for selection of a device for AI/ML. The device may be a splitting WTRU. The device may be selected based on the discovery response. The discovery response may be from the device. The method may further include performing a registration procedure capable of providing a capability indication for splitting. The method may further include determining availability of local service in an area of the WTRU for use in the splitting. The negotiated split may be based on an expected performance of the WTRU. The negotiated split may be based on performance data of the WTRU. The configured connection may be configured based on the performance class for AI/ML.

The WTRU may include a processor, and a transceiver communicatively coupled to the processor to transmit a discovery solicitation message, the discovery solicitation message including a discovery code for PC5 based AI/ML and a requested Al/ML model and performance class for Al/ML, receive a discovery response message, the discovery response message including an identification of the AI/ML model, the performance class and target user information, configure a PC5 connection based on the discovery response message, and negotiate a PC5 based Al/ML split. The discovery solicitation message may allow for selection of a device for AI/ML. The device may be a splitting WTRU. The device may be selected based on the discovery response. The discovery response may be from the device. The processor and transceiver further operate to perform a registration procedure capable of providing a capability indication for splitting. The processor and transceiver further operate to determine availability of local service in an area of the WTRU for use in the splitting. The negotiated split may be based on an expected performance of the WTRU. The negotiated split may be based on performance data of the WTRU. The configured connection may be configured based on the performance class for AI/ML.

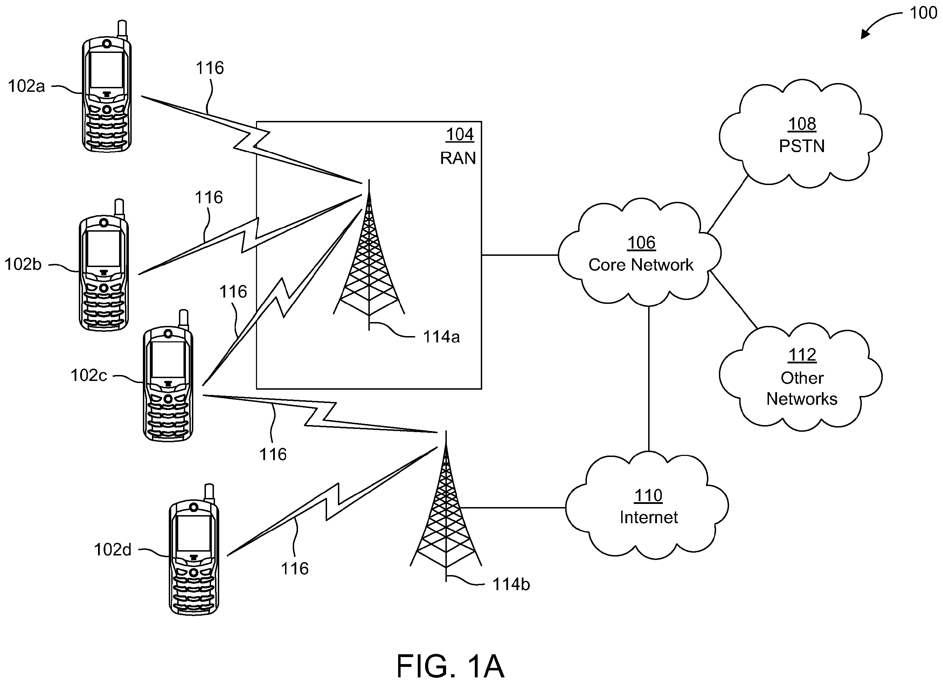

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word discrete Fourier transform Spread OFDM (ZT-UW-DFT-S-OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104, a core network (CN) 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a station (STA), may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a NodeB, an eNode B (eNB), a Home Node B, a Home eNode B, a next generation NodeB, such as a gNode B (gNB), a new radio (NR) NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, and the like. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed Uplink (UL) Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using NR.

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104 may be in communication with the CN 106, which may be any type of network configured to provide voice, data, applications, and/or voice over internet protocol (VoIP) services to one or more of the WTRUs 102a, 102b, 102c, 102d, The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the CN 106 may be in direct or indirect communication with other RANs that employ the same RAT as the RAN 104 or a different RAT. For example, in addition to being connected to the RAN 104, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

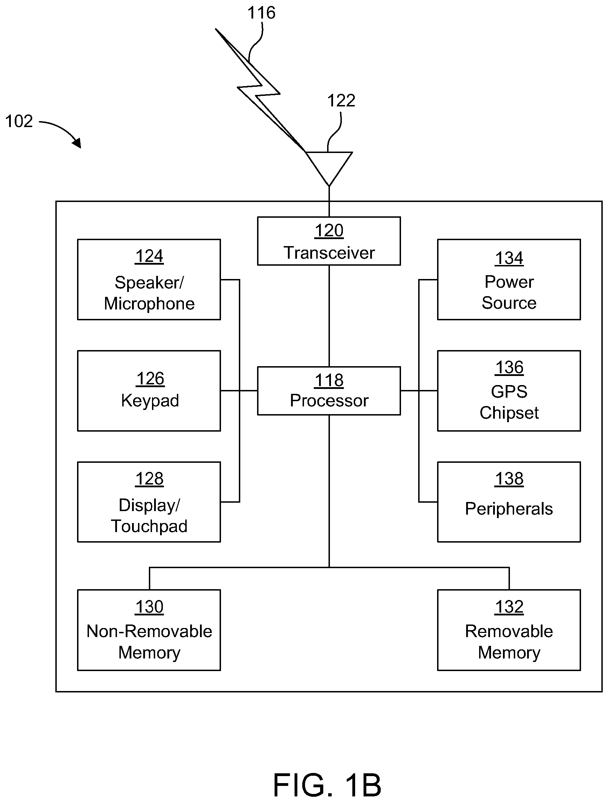

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any subcombination of the foregoing elements while remaining consistent with an embodiment.

The processor 118 may be a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs), any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors. The sensors may be one or more of a gyroscope, an accelerometer, a hall effect sensor, a magnetometer, an orientation sensor, a proximity sensor, a temperature sensor, a time sensor; a geolocation sensor, an altimeter, a light sensor, a touch sensor, a magnetometer, a barometer, a gesture sensor, a biometric sensor, a humidity sensor and the like.

The WTRU 102 may include a full duplex radio for which transmission and reception of some or all of the signals (e.g., associated with particular subframes for both the UL (e.g., for transmission) and DL (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the DL (e.g., for reception)).

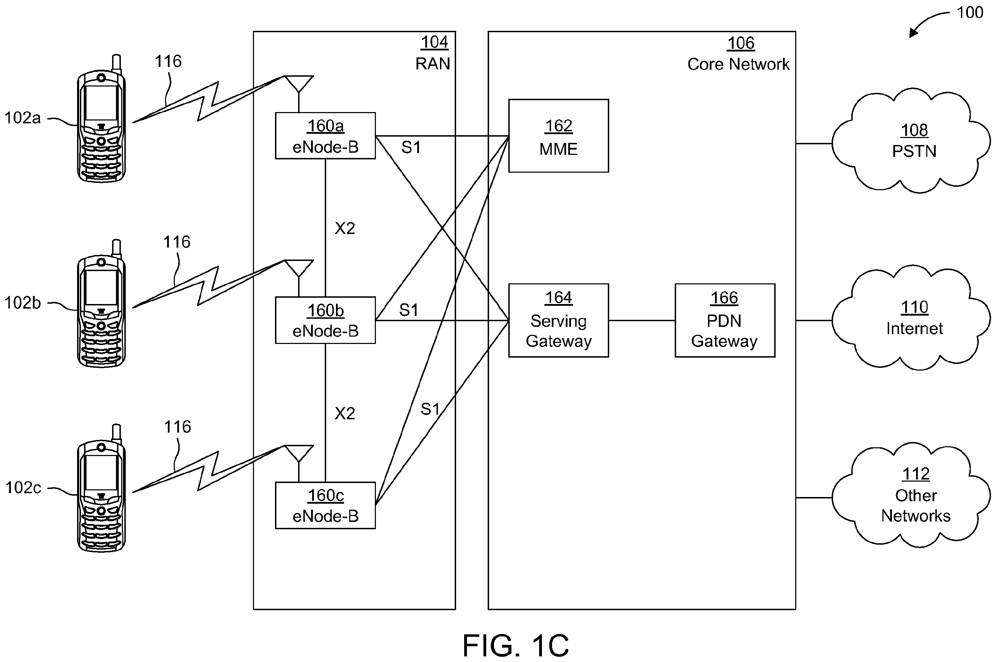

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional landline communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz, and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode) transmitting to the AP, all available frequency bands may be considered busy even though a majority of the available frequency bands remains idle.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

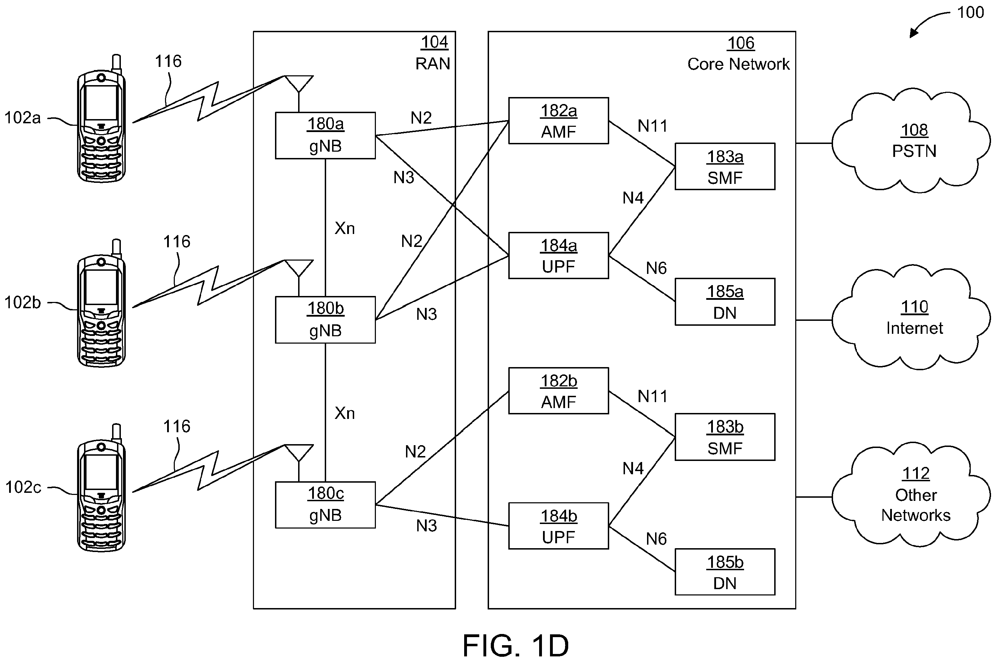

FIG. 1D is a system diagram illustrating the RAN 104 and the CN 106 according to an embodiment. As noted above, the RAN 104 may employ an NR radio technology to communicate with the WTRUs 102a, 102b, 102c over the air interface 116. The RAN 104 may also be in communication with the CN 106.

The RAN 104 may include gNBs 180a, 180b, 180c, though it will be appreciated that the RAN 104 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, DC, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 106 shown in FIG. 1D may include at least one AMF 182a, 182b, at least one UPF 184a,184b, at least one Session Management Function (SMF) 183a, 183b, and possibly a Data Network (DN) 185a, 185b. While the foregoing elements are depicted as part of the CN 106, it will be appreciated that any of these elements may be owned and/or operated by an entity other than the CN operator.

The AMF 182a, 182b may be connected to one or more of the gNBs 180a, 180b, 180c in the RAN 104 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of non-access stratum (NAS) signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and the like. The AMF 182a, 182b may provide a control plane function for switching between the RAN 104 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 106 via an N11 interface. The SMF 183a, 183b may also be connected to a UPF 184a, 184b in the CN 106 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing DL data notifications, and the like. A PDU session type may be IP-based, non-IP based, Ethernet-based, and the like.

The UPF 184a, 184b may be connected to one or more of the gNBs 180a, 180b, 180c in the RAN 104 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering DL packets, providing mobility anchoring, and the like.

The CN 106 may facilitate communications with other networks. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local DN 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions,

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

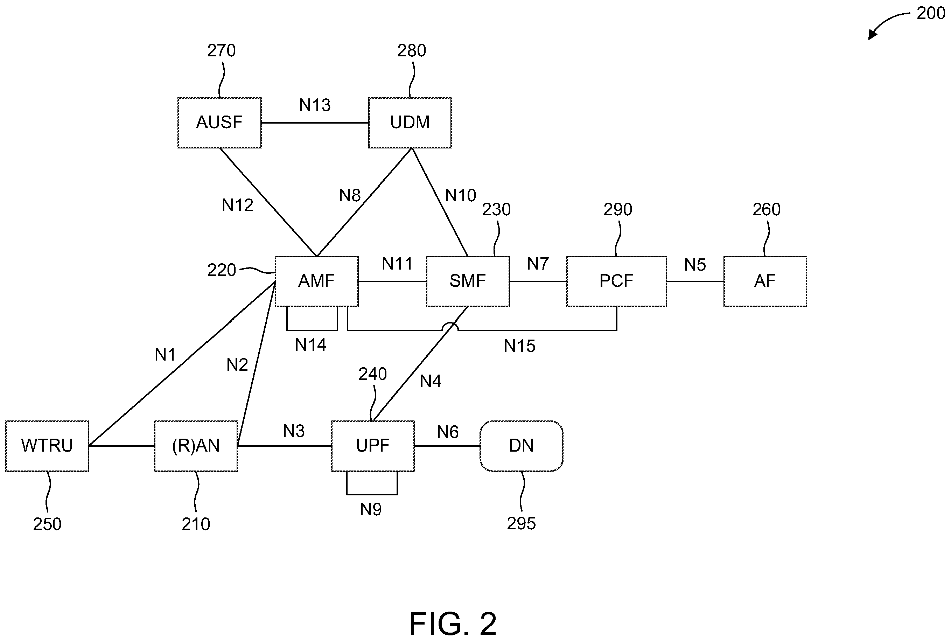

FIG. 2 illustrates is a reference model 200 of a potential architecture of 5G or NextGen network. The architecture of model 200 specifies discrete interfaces between control-plane elements. RAN 210 refers to a radio access network based on the 5G RAT or Evolved E-UTRA that connects to the NextGen core network. The Access Control and Mobility Management Function (AMF) 220 at least includes the following functionalities, Registration management, Connection management, Reachability management, Mobility Management, etc. The Session Management Function (SMF) 230 at least includes the following functionalities, session management (including session establishment, modify and release), WTRU IP address allocation, selection and control of UP function, etc. The User plane function (UPF) 240 at least includes the following functionalities, packet routing & forwarding, packet inspection, traffic usage reporting, etc.

5G location service (LCS) may provide functionality to provide the positioning information of a WTRU 250. The positioning of WTRU 250 may be supported by RAT dependent position method. A RAT dependent position method may rely on, for example, 3GPP RAT measurements obtained by a target WTRU and/or on measurement obtained by an Access Network of 3GPP RAT signals transmitted by a target WTRU. Positioning of a WTRU may be supported by RAT independent position methods. A RAT independent position method may rely on non-RAT measurements obtained by a WTRU and/or on other information. Location information for one or multiple target WTRUs may be requested by and reported to an LCS client or an application function (AF) 260 within or external to a 3GPP operator network, or a control plane NF within 3GPP system. For location request from LCS client or AF 260, privacy verification of the target WTRU may be enabled to check whether it is allowed to acquire the WTRU location information.

Several different types of location requests may be supported. A Mobile Terminated Location Request (MT-LR) that may occur with a Mobile Terminated Location Request (MT-LR), an LCS client or AF sends a location request to the 5G Network for the location of a target WTRU. A Mobile Originated Location Request (MO-LR) that may occur with a Mobile Originated Location Request (MO-LR), a WTRU sends a request to the 5G Network for location related information for the WTRU. An Immediate Location Request that occurs with an immediate location request, an LCS client or AF 260 sends or instigates a location request for a target WTRU(s) and expects to receive a response containing location information for the target WTRU(s) within a short time period. The Immediate Location Request may be used for an MT-LR or MO-LR. A Deferred Location Request that occurs with a deferred location request, an LCS client or AF 260 sends a location request to the 5G network for a target WTRU(s) and expects to receive a response when an indicated event occurred for the target WTRU at some future time. It may be used for an MT-LR.

Authentication server function (AUSF) 270 validates the identity of a user and providing access to the network resources based on their security level.

Unified data management (UDM) 280 stores and manages the user's data, including their IMSI and authentication data. UDM 280 provides other network function, i.e., AMF 220, SMF 230, for example, with the user's data, e.g., authentication data, when requested.

Policy control function (PCF) 290 is responsible for enforcing the policies that govern the user's access to the network resources. PCF 290 provides other network function, i.e., AMF 220, SMF 230, for example, with the user's policy data when requested. Data network (DN) 295 is within the system as illustrated, and is described herein.

There may be a benefit to supporting Al/ML operation in 5GC. As performance of Al/ML applications, including split computing and model transfer cases, can be improved significantly when the estimation on the network conditions can be given to the AI/ML applications before/during the operations. Solutions may monitor the performance data and/or analytic data on performance between WTRU and 5GC and provide the result to the WTRU or AF so that the WTRU or AF may initiate AI/ML splitting operation.

For example, according to KPI table for AI/ML splitting, AI/ML image recognition work may be split when uplink E2E latency is under 2ms and data rate is over 1.08 Gbps and those information may be provided to the WTRU or AF to initiate the operation as set forth in TABLE 1 below.

**TABLE 1**

| **Uplink KPI** | | | | | **Downlink KPI** | | | | **Remarks** |
|---|---|---|---|---|---|---|---|---|---|
| **Max allowed UL E2E latency** | **Experienced data rate** | **Payload size** | **Comm. service availability** | **Reliability** | **Max allowed DL E2E latency** | **Experienced data rate** | **Payload size** | **Reliability** | |
| 2 ms | 1.08Gbps | 0.27 MByte | 99.999 % | 99.9 % | | | | 99.99 9% | Split Al/ML image recognition |
| 100 ms | 1.5Mbps | | | | 100 ms | 150Mbps | 1.5 MByte/ frame | | Enhanced media recognition |
| | 4.7Mbps | | | | 12 ms | 320Mbps | 40 kByte | | Split control for robotics |
| Communication service availability relates to the service interfaces, and reliability relates to a given system entity. One or more retransmissions of network layer packets can take place in order to satisfy the reliability requirement. | | | | | | | | | |

As an extension of current AI/ML support in 3GPP, AI/ML operation may be enhanced with D2D to provide a benefit. For example, even though it is decided that the WTRU or Application server decided to split Al/ML operation such that for AI/ML splitting, a WTRU (such as WTRU-A) may be responsible for calculation of layer 1-15 and application server may be responsible for calculation of layer 16-24, the WTRU (such as WTRU-A) may offload some of the Al/ML operation to the other WTRU (such as WTRU-B) nearby when the PC5 connection is acceptable, and the other WTRU (such as WTRU-B) may be responsible for calculation of layer 5-15 and the WTRU (such as WTRU-A) may only be responsible for calculation of layer 1-4.

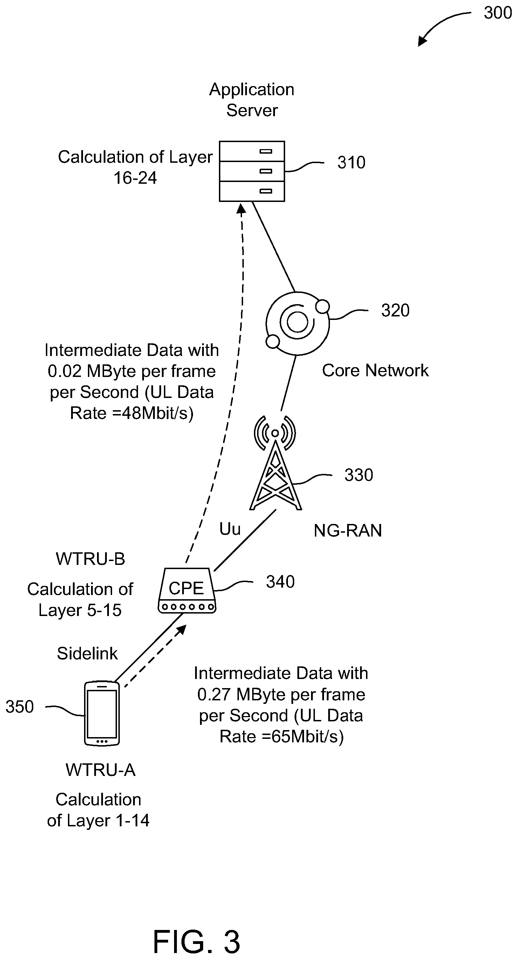

FIG. 3 illustrates an example 300 of PC5 based AI/ML operation splitting. As illustrated in example 300, when WTRU-A 350 is responsible for calculation of layer 1-15, the AI/ML operation may be split between WTRU-A 350 and WTRU-B 340 such that WTRU-A 350 is responsible for Al/ML operation 1-4 and WTRU-B 340 is responsible for Al/ML operation 5-15. WTRU-A 350 may benefit as WTRU-A 350 may need less power consumption in WTRU-A 350 and may provide better Al/ML service, such as reduced delay as WTRU-B 340 has closer connection with network 320, such as over NG-RAN 330 to application server 310. An Al/ML operation using multiple WTRUs in connection with PC5 connection as PC5 based AI/ML operation and Al/ML service using application server in the network 320 as Server 310 based AI/ML operation is depicted.

For discovery and PC5 connection setup for PC5 based AI/ML support, the present ProSe mechanism configures the WTRU to discover other WTRUs supporting same application using ProSe Application code. When the ProSe application code matches, the WTRU may select the other WTRU for further communication. The WTRU may also consider target User Info for discovery.

For PC5 based AI/ML operation, more information may be considered when the WTRU selects the other WTRU. For example, the WTRU may check whether the same AI/ML model and AI/ML logic is available at the other WTRU. The WTRU may need to be aware of the capability of the peer WTRU to perform PC5 Al/ML operation.

Dynamic Negotiation of AI/ML splitting between the WTRU and AI/ML Application server may be used. When both PC5 based Al/ML operation and Server based Al/ML operation are available and the WTRU trigger AI/ML service, the WTRU may decide whether PC5 based Al/ML operation, Server based Al/ML operation, or any hybrid type using both of the operation is used. In order to compare between PC5 based AI/ML operation and Server based Al/ML operation, the WTRU may measure the expected performance using PC5 based Al/ML operation allowing the WTRU to be aware of the capabilities of the peer WTRU.

When the WTRU has low computation capacity, the application can change the splitting point to let the WTRU calculate fewer layers while increasing the data rate in UVU for transmitting a higher load of intermediate data to network. In other words, based on NW performance and the WTRU's status, AI/ML splitting can be decided and negotiated. Therefore, when the WTRU is aware of PC5 based Al/ML operation, the availability of PC5 based Al/ML operation may be considered for better AI/ML splitting between the WTRU and Application server.

The AI/ML splitting operation may be enhanced when PC5 based AI/ML operation and Server based Al/ML operation are available.

Support of local Al/ML service may be used. There are several use cases for local service utilizing 5GC. For example, in an amusement park, stadium, or exhibition, there may be a local area data network (LADN) to provide connectivity to the local application server and customized service based on the characteristics of the event and location. An Al/ML service can be one of the customized services for local environment, e.g. image recognition can be enhanced to provide better object recognition if the targets are restricted to a specific group of objects in the local area. For offloading, PC5 based AI/ML service may be considered. In this local AI/ML service scenario, the availability of local AI/ML service may be dynamically changed and configuration (e.g., application server address, DNS server address, possible Al/ML operation, Al/ML model to be supported, etc.) may be provided dynamically to the users in the area.

For local AI/ML service, the configuration data may be provided for Al/ML operation and availability of PC5 based AI/ML operation. Al/ML operation implies that AI/ML model distribution, AI/ML model splitting for offloading, and Federated Learning support. PC5 based AI/ML operation implies the AI/ML operation among multiples WTRUs and WTRUs may communicate using PC5 connection. For PC5 based Al/ML operation, the WTRU may discover the other WTRUs using ProSe mechanism and for selection of WTRUs for PC5 based Al/ML operation, ProSe discovery and PC5 connection setup mechanism are enhanced.

In order to provide configuration and policy updates, 5GS may support a WTRU Configuration Update procedure. For localized service, local access data network (LADN) may be supported. When the WTRU supports LADN, the WTRU may be informed of the availability of PDU session using LADN per WTRU's location and the WTRU may initiate PDU session using LADN.

Based on dynamicity of local AI/ML service and limited availability per location and time, the WTRU may be configured for the required information to use local AI/ML service and UCU mechanism and PDU session establishment mechanism may be enhanced to support dynamic configuration update.

Enhancement of Discovery and PC5 connection setup for PC5 based Al/ML is described. When the WTRU discovers and selects the other WTRU for PC5 based Al/ML operation, which may be characterized by service name, Al/ML operation name, and/or QoS requirement of the service and operation, e.g., processing delay, communication delay, data rate for some AI/ML splitting operation. In addition to the ProSe application information, other parameters may be considered to select the proper WTRU for PC5 based Al/ML operation. The supported AI/ML framework, AI/ML model, and/or AI/ML algorithm may be considered. The WTRU's capability, such as power source, available time in battery power, battery power level, available memory, and/or computing power, may be considered. The possible WTRU's Role for Al/ML operation may be considered, such as Al/ML model distributing function, AI/ML model splitting and/or combining function, Al/ML result determination function, etc. The link quality of PC5 channel may be considered, such as signal strength, bit rate, and error rate, for example.

When ProSe Discovery, such as model A discovery or model B discovery, is performed between the WTRU and the other WTRU, prose discovery code is used to identify the application using the ProSe service. For PC5 based AI/ML operation, information may be included in the discovery code or added as additional information in discovery message. This information may include application information relating to the AI/ML operation, such as application ID, PLMN ID, announcing User Information ID, target User Info ID to be discovered, for example. This information may include identification information of supported Al/ML algorithm or model for example, AlexNet, Linear Regression, Deep Neural Networks, Logistic Regression, Decision Trees, etc. and supported AI/ML framework, e.g. Tensorflow, TFlearn, etc., This information may include the WTRU's capability such as power source, available time in battery power, battery power level, available memory, and/or computing power.

Alternatively, or additionally, the WTRU's capability may be included. The WTRU capability class can be defined and preconfigured in the WTRU and class values can be used. For example, Class based on terminals capability can be defined and representing the combination of capabilities including battery power, available memory, and/or computing power. For example, class1 may be provided where the Battery Power > 80%, Available memory > 16GB, Computing power > 8core*1GHz, class 2 where the Battery Power > 80%, Available memory > 12GB, Computing power > 4core*1GHz, and class 3 where the Battery Power > 80%, Available memory > 8GB, Computing power > 4core*1GHz, for example.

The possible WTRU's role for AI/ML operation may also be included, for example, along with AI/ML model distributing function, AI/ML model splitting and/or combining function, AI/ML result determination function, etc. AI/ML model distributing function is the function to distribute AI/ML model to the other WTRUs involved to AI/ML operation. AI/ML model splitting is the function to split AI/ML model to be performed at each entity, for example, in the Al/ML model involving server and user terminal, AI/ML model splitting function to split the used AI/ML model into two sub models that one part is performed at server and the other part is performed at user terminal. In this case, the result of AI/ML model operation at one side may be used for performing the Al/ML model operation at the other side. AI/ML model combining is the function to make one AI/ML model by combining two Al/ML models. AI/ML result determination is the function is to derive final result of AI/ML operation based on the results collected from entity involved at the AI/ML operation.

Alternatively, or additionally, identification information of the supported Al/ML operation or model may be included in discovery code or included as additional information under application information relating to the AI/ML operation. Alternatively, or additionally, the above-mentioned information can be negotiated with the WTRU during PC5 connection setup for PC5 based Al/ML operation.

Additionally, and alternatively, the WTRU may indicate its intention to support PC5 based AI/ML operation, e.g., intention to join PC5 based AI/ML splitting for others. The intention may be provided with the condition to allow or reject the request to join the operation, for example in certain link characteristics (e.g., UL/DL latency, data rates, and so on.). The WTRU may consider the indication from the discovered WTRU when the WTRU decides whether to make PC5 connection setup with the discovered WTRU for PC5 based Al/ML operation.

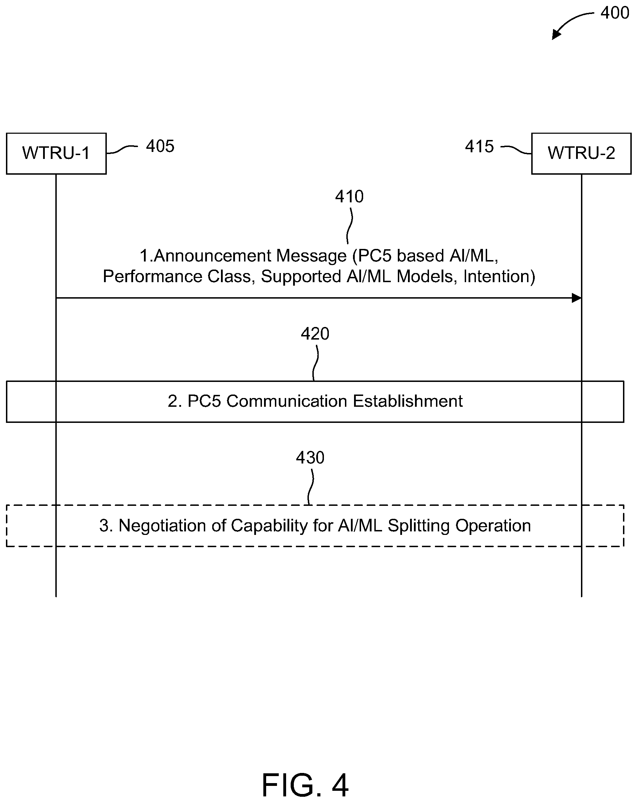

FIG. 4 illustrates a signaling diagram 400 of a model A based Discovery and PC5 connection setup for PC5 based AI/ML. In signaling diagram 400 a first WTRU, WTRU-1 405, is communicatively coupled to a second WTRU, WTRU-2 415.

At 410, diagram 400 include WTRU-1 405 sending an announcement message to WTRU-2415. The Announcement message may include the Type of Discovery Message, ProSe Application code, and Application information relating to the Al/ML operation. ProSe Application code may include the information of an application supporting AI/ML and it may include additional information, such as supported PC5 based AI/ML operation. This additional may include PC5 based Al/ML splitting, and/or supported AI/ML algorithm, for example.

The application information relating to AI/ML operation may include the following information: user information of the Application, such as User ID, identification information of supported AI/ML algorithm or model, for example, AlexNet, Linear Regression, Deep Neural Networks, Logistic Regression, Decision Trees, etc., and supported Al/ML framework, e.g., Tensorflow, TFlearn, etc., information representing the WTRU's device capability, e.g. Class information on WTRU's capability, value on WTRU's battery level, available memory, and/or computing power may be included. The possible WTRU's Role for Al/ML operation, e.g., AI/ML model distributing function, AI/ML model splitting and/or combining function, AI/ML result determination function, etc. may be included. AI/ML model distributing function is the function to distribute Al/ML model to the other WTRUs involved to AI/ML operation. AI/ML model splitting is the function to split AI/ML model to be performed at each entity, for example, in the Al/ML model involving server and user terminal, AI/ML model splitting function to split the used AI/ML model into two sub models that one part is performed at server and the other part is performed at user terminal. In this case, the result of Al/ML model operation at one side may be used for performing the AI/ML model operation at the other side. Al/ML model combining is the function to make one Al/ML model by combining two AI/ML models. AI/ML result determination is the function is to derive final result of AI/ML operation based on the results collected from entity involved at the Al/ML operation.

WTRU-1 405 may indicate its intention to support PC5 based Al/ML operation, e.g., intention to join PC5 based AI/ML splitting for others. When there is any condition relating to the intention, it may be discovered together, can be exchanged during PC5 connection setup, or can be checked by 5GS to inform whether the discovered WTRU is proper or not for PC5 based AI/ML operation.

At 420, WTRU-2 415 may monitor the announcement message of WTRU-1 405 at 410. If WTRU-2 415 is interested in the received ProSe Application code, WTRU-2 415 may perform direct PC5 link establishment procedure with WTRU-1 405. If the announcement messages includes some application information relating to an AI/ML operation, such as supported PC5 based Al/ML operation, AI/ML algorithm, WTRU's capability, for example, WTRU-2 415 may consider the provided application information in deciding whether WTRU-2 415 performs direct PC5 link establishment with WTRU-1 405. For example, if WTRU-2 415 is interested in PC5 based AI/ML splitting and supported Al/ML algorithm and/or WTRU's capability from WTRU-1 405 may not meet an acceptable threshold for PC5 based AI/ML splitting. WTRU-2 415 may not select WTRU-1 405 for PC5 link establishment and WTRU-2 415 may try to discover other WTRUs. When WTRU-2 415 receives multiple announcement messages from multiple WTRUs, WTRU-2 415 may select one or multiple WTRUs which meet the requirements for the ProSe Service and application based on whether the content of announcement message satisfies the requirement for WTRU-2 415 to be involved in intended Al/ML operation for the application represented by ProSe Application code, for example, whether WTRU's device capability is higher than some class value, whether WTRU's supported Al/ML algorithms includes the interested AI/ML algorithm of WTRU-2 415, whether WTRU supports some WTRU's role for AI/ML operation, e.g., supporting Al/ML model splitting, or whether all mentioned requirements are satisfied or only some of requirements are satisfied, and other parameters such as signal quality. WTRU-2 415 may perform direct PC5 link establishment procedure with those selected WTRUs.

Additionally or alternatively, the PC5 link quality between WTRU-1 405 and WTRU-2 415 may be one of criteria in the decision whether WTRU-2 415 perform direct PC5 link establishment with WTRU-1 405. For example, WTRU-2 415 may not select WTRU-1 405 if the PC5 link quality is below some threshold.

WTRU-1 405 may consider WTRU-2's 415 intention to join a PC5 based Al/ML operation if available with the condition when it selects WTRU-2 415 as entity to perform PC5 link establishment for PC5 based AI/ML operation. WTRU-1 405 may check its availability based on the condition by referring to the 5GS or signaling exchange between WTRU-1 405 and WTRU-2 415 during or after PC5 connection setup.

At 430, WTRU-2 415 and WTRU-1 405 may negotiate the WTRU's capability for PC5 based AI/ML during or after PC5 link establishment procedure. Negotiated WTRU's capabilities may include some application information relating to Al/ML operation, such as supported PC5 based Al/ML operation, supported Al/ML algorithm, WTRU's device capability such as power source, battery level, available memory, and/or computing power. When there are multiple WTRUs selected and setup PC5 connection at 420, WTRU-2 415 may perform capability negotiation with multiple WTRUs. And based on the capability negotiation, WTRU-2 415 may down select some WTRUs. For example, when some WTRUs may report their respective device capability as connected to power line. Such WTRUs may be selected and other WTRUs which reported their device capability as powered by battery may be dropped. For example, when some WTRUs supported multiple WTRU's role, for example, both an AI/ML splitting function and an AI/ML model distribution function, and WTRU's capabilities are high enough to support multiple WTRU's role. The WTRU supporting multiple capabilities may be selected and other WTRUs which only support one role, e.g., Al/ML splitting function or Al/ML model distribution function, may be dropped in consideration of operation efficiency.

WTRU-2 415 may proceed further operation for application with the selected WTRUs.

For example, if the target info is the reference WTRU to be discovered, the reference WTRUs have the interest on the Ranging service and support the Ranging/Sidelink Positioning capability of the target WTRU, if any, the reference WTRU performs the direct PC5 link establishment procedure with target WTRU.

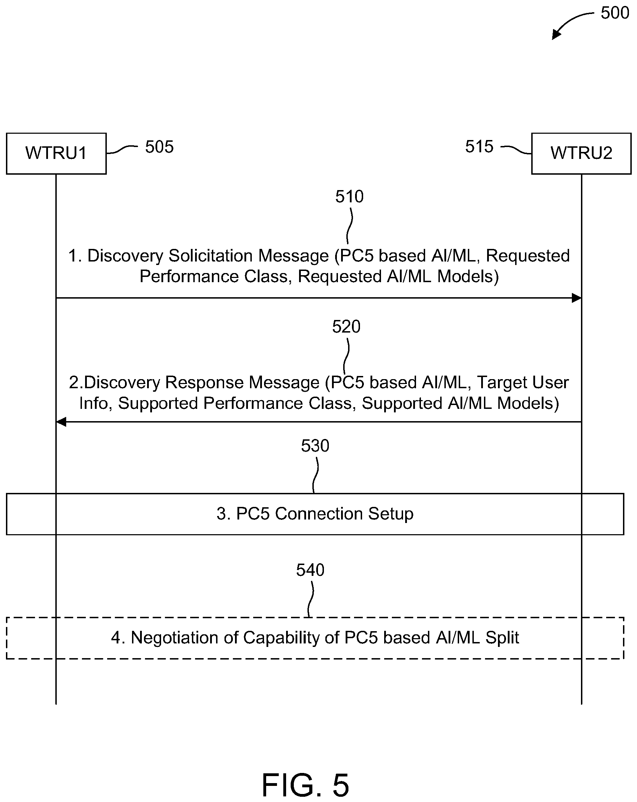

FIG. 5 illustrates a signaling diagram 500 for a model B based discovery and PC5 connection setup for PC5 based AI/ML. In signaling diagram 500 a first WTRU, WTRU-1 505, is communicatively coupled to a second WTRU, WTRU-2 515. In signaling diagram 500, ProSe discovery is enhanced to include discovery code dedicated for PC5 based AI/ML via a discovery solicitation message at 510. A requested AI/ML model and requested WTRUs performance class and for PC5 based AI/ML operation may be added in a discovery message via 510 and 520.

As illustrated in FIG. 5, at 510, WTRU1 505 sends a discovery solicitation message to WTRU2 515. The discovery solicitation message may include the Type of Discovery Message and ProSE Query Code. The ProSe Query Code may include information such as interested ProSe Application code and interested application information relating to Al/ML operation. The ProSe Application code may include the information of interested application supporting AI/ML such as application ID and PLMN ID and may include additional information, such as, for example, supported PC5 based AI/ML operation, PC5 based AI/ML splitting, and/or supported AI/ML algorithm. The interested Application information relating to AI/ML operation may include announcing user information, target user information to be discovered, information of requested PC5 based Al/ML operation for the application ID, such as requested Al/ML operation name or ID or QoS requirement for requested AI/ML operation, identification information of interested AI/ML algorithm or model, for example, AlexNet, Linear Regression, Deep Neural Networks, Logistic Regression, Decision Trees, etc., information requested WTRU's device capability, e.g., class information on WTRU's capability, value on WTRU's battery level, available time in battery power, indication of source, available memory, and/or computing power, requested WTRU's Role for AI/ML operation, e.g., AI/ML model distributing function, AI/ML model splitting and/or combining function, AI/ML result determination function, etc., and supported UE1's Role for AI/ML operation, e.g. AI/ML model distributing function, Al/ML model splitting and/or combining function, AI/ML result determination function, etc. Al/ML model distributing function is the function to distribute AI/ML model to the other WTRUs involved to AI/ML operation. Al/ML model splitting is the function to split AI/ML model to be performed at each entity, for example, in the AI/ML model involving server and user terminal, Al/ML model splitting function to split the used Al/ML model into two sub models that one part is performed at server and the other part is performed at user terminal. In this case, the result of Al/ML model operation at one side of the communication may be used for performing the AI/ML model operation at the other side of the communication. Al/ML model combining is the function to make one Al/ML model by combining two Al/ML models. Al/ML result determination is the function to derive final result of AI/ML operation based on the results collected from entity involved at the AI/ML operation.

Alternatively, or additionally, identification information of supported AI/ML algorithm or model may be included in application information relating to the Al/ML operation.

The discovery solicitation message sent by WTRU1 505 may be received by multiple WTRUs including WTRU2 515. At 520, if WTRU2 515 receives the discovery solicitation message from WTRU1 505 and a matched is determined, WTRU2 515 responds with discovery response message. For example, when WTRU1 505 includes ProSe Application Code for PC5 based Al/ML splitting, requested AI/ML algorithm includes Logistic Regression, requested device capability with some requested computing power level, requested WTRU's role as Al/ML model splitting function or AI/ML model distributing function in the solicitation message, if WTRU2 515 supports ProSe Application for PC5 based AI/ML splitting and WTRU2 515 supports AI/ML algorithms include Logistic Regression, WTRU2 515 capability, e.g., computing power, available memory, and power source is higher than the requested device capability and WTRU2 515 is authorized as Al/ML model splitting function or AI/ML model distribution function by Application provider or Mobile Network Service Provider, WTRU2 515 determines a match with the discovery solicitation message. The discovery response message may include the Type of Discovery Message, ProSe Application code, and Application information relating to the Al/ML operation. The ProSe Application code may include the information of Application supporting AI/ML and it may include more information for example supported PC5 based Al/ML operation e.g. PC5 based AI/ML splitting, and/or supported Al/ML algorithm. The Application information relating to Al/ML operation may include user information of the Application, such as User ID, identification information of supported AI/ML algorithm or model for example, AlexNet, Linear Regression, Deep Neural Networks, Logistic Regression, Decision Trees, etc., information representing WTRU's device capability, e.g., class information on WTRU's capability, value on WTRU's battery level, available memory, and/or computing power, and possible WTRU's Role for Al/ML operation, e.g. AI/ML model distributing function, AI/ML model splitting and/or combining function, AI/ML result determination function, etc.

When WTRU2 515 is available for requested PC5 based Al/ML operation under some conditions, WTRU2 515 may check whether the condition is satisfied or not before response. WTRU2 515 may rely on network analytics or prediction service to check whether the condition to be satisfied or not. When there are other WTRUs which received discovery solicitation message from WTRU1 505, the other WTRUs also perform operation described at 520.

At 530, when WTRU1 505 receives the discovery response message from WTRU2 515, WTRU1 505 may perform direct PC5 link establishment procedure with WTRU2 515. For example, based on the content of discovery response message from WTRU2 515, WTRUI1 505 decides whether WTRU2 515 may be selected for the desired ProSe Service and application which is represented by the ProSe Query Code at 510 and WTRU1 505 may perform direct PC5 link establishment procedure with WTRU2 515 when WTRU2 515 is selected for the desired ProSe Service.

When multiple WTRUs are sent discovery response messages in response to the discovery solicitation message sent at 510, WTRU1 505 may select one or multiple WTRUs which are considered to be proper for the desired ProSe Service and application based on the content of discovery response message and other parameters such as signal quality, etc. If the discovery response messages includes some application information relating to Al/ML operation such as supported PC5 based AI/ML operation, AI/ML algorithm, WTRU's capability, WTRU1 505 may consider such information to decide whether WTRU1 505 performs direct PC5 link establishment with WTRU2 515. For example, if WTRU1 505 can operate in PC5 based AI/ML splitting and supported AI/ML algorithm and/or WTRU's capability of WTRU2 515 seems not good enough for interested PC5 based AI/ML splitting, WTRU1 505 may not select WTRU2 515 for PC5 link establishment and WTRU1 505 may try to discover other WTRUs. For example, when multiple discovery response messages are received, and responding WTRUs support the requested Al/ML model/algorithm and requested WTRU's role, WTRU1 505 may select capable WTRUs based on their supported capability, for example WTRU1 505 may select one or multiple WTRUs having higher capability, e.g., higher capability class, or higher computing power with larger available memory and/or more sustainable power source, as compared to other WTRUs. For example, when WTRU1 505 requests multiple roles, e.g., Al/ML model splitting function and AI/ML model distributing function, in the discovery solicitation message of 510 and received multiple discovery response messages from WTRU2 515,... ,WTRU10 (not shown), WTRU1 505 may select capable WTRUs for each different requested role based on their supported role and capability. For example, WTRU2 515 may be selected for AI/ML model splitting function when WTRU2 515 and other WTRUs support the AI/ML model splitting function and WTRU2 515 has higher capability than other WTRUs supporting the AI/ML model splitting. WTRU3 (not shown) may be selected for AI/ML model distributing function when WTRU3 and other WTRUs support the Al/ML model distributing function and WTRU3 has higher capability than other WTRUs supporting Al/ML model distributing function.

Additionally or alternatively, the PC5 link quality between WTRU1 505 and WTRU2 515 may be one of criteria in decision whether WTRU1 505 performs direct PC5 link establishment with WTRU2 515, e.g. WTRU1 505 may not select WTRU2 515 if the PC5 link quality is below some threshold.

At 540, WTRU1 505 and WTRU2 515 may negotiate WTRU's capability for PC5 based AI/ML during or after PC5 link establishment procedure. Negotiated WTRU's capabilities may include some application information relating to AI/ML operation such as supported PC5 based Al/ML operation, supported Al/ML algorithm, WTRU's device capability such as power source, battery level, available memory, and/or computing power. When there are multiple WTRUs selected and setup PC5 connection at 530, WTRU1 505 performs capability negotiation with multiple WTRUs. Based on the capability negotiation, WTRU1 505 may down select some WTRUs. For example, when some WTRUs reported their device capability as connected to power line, such WTRUs may be selected and other WTRUs which reported their device capability as powered by battery may be dropped.

WTRU1 505 may proceed further operation for application with the selected WTRUs.

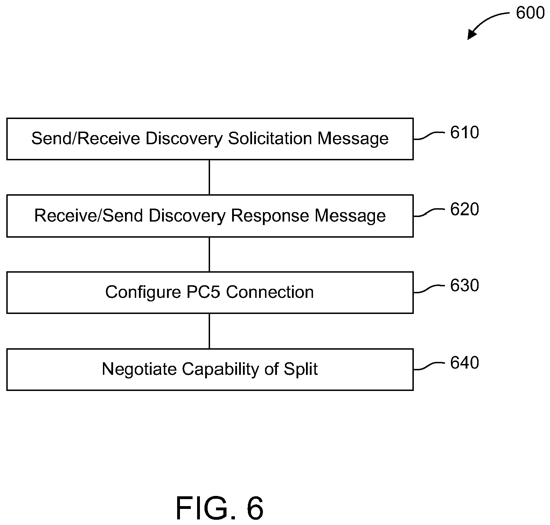

FIG. 6 illustrates a method 600 for enhancement of discovery and PC5 connection for PC5 based AI/ML. Method 600 includes establishment of the PC5 communication. This establishment may include one WTRU sending a discovery solicitation message to another WTRU at 610. The another WTRU may then send a discovery response message back to the WTRU at 620. Once the discovery messages are sent/received, the PC5 connection may be configured at 630. Method 600 may include negotiating the capability of the split between the WTRUs at 640.

Dynamic WTRU configuration for Local Al/ML service may be used. When aWTRU enters a location where a local Al/ML service is available, 5G Network may inform of the availability of local AI/ML service and configuration parameters for the local Al/ML service to the WTRU. For the local AI/ML service, if PC5 based AI/ML service is available, discovery parameter for the ProSe service can be provided to the WTRUs. When the WTRU sends a registration request, the WTRU may inform its support on AI/ML service including PC5 based Al/ML service. After receiving the WTRU's capability supporting AI/ML service and/or PC5 based AI/ML service, 5GC may inform any configuration parameter for local AI/ML service. It can be enhanced to reduce signaling overhead by updating configuration parameter for the local Al/ML service to the WTRU when 5GC aware that the WTRU is in the service area for the local Al/ML service.

Additionally, or alternatively, during registration, the WTRU may indicate its intention to support AI/ML operation over PC5, e.g., intention to support PC5 based Al/ML splitting for others. The intention may include the condition to allow or reject the request to join the operation, for example in certain link characteristics (e.g., UL/DL latency, data rates, and so on.).The 5GS may refer to indication to decide whether configuration information for some specific Al/ML operation are needed to be shared to the WTRU, or select potential available WTRU's list for some PC5 based Al/ML operation which may be shared to the other WTRUs to help discovery of other WTRUs for PC5 based Al/ML operation.

As another solution, when specific DN is defined for local AI/ML service and the WTRU supports the service and connection to the DN, if the DN is available in the registration area, the WTRU may establish PDU session for the DN. After receiving PDU session establishment/modification request for the DN, 5GC may inform any configuration information for the AI/ML service supported in the DN in PDU session establishment/modification response, for example, the configuration information, address of application server or Al/ML server may be included in PCO in the PDU session establishment/modification response.

Using the configuration information, the WTRU may access the Application server to download application and supported Al/ML model. By downloading the application and AI/ML model, the WTRU supporting PC5 based AI/ML may be involved PC5 based AI/ML service for the application with supported AI/ML model. And when PC5 based AI/ML service is possible for the application, any discovery information such as application information, discovery code for the ProSe service can be downloaded from the application server.

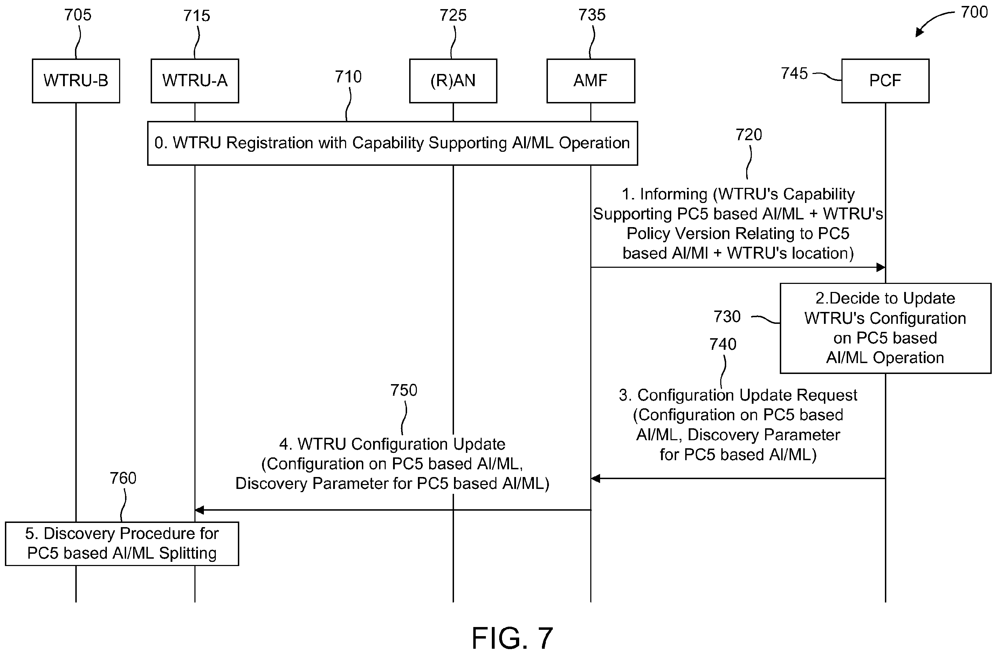

FIG. 7 illustrates a signaling diagram 700 of a WTRU configuration Update procedure for PC5 based AI/ML. . Diagram 700 includes a WTRU-A 715, a WTRU-B 705, AMF 735, PCF 745 and a (R)AN 725 communicatively coupled for the signaling described below.

At 710, signaling diagram 700 include a WTRU, such as WTRU-A 715, registration with the capability of supporting AI/ML operation. When a WTRU (such as WTRU-A 715) supports PC5 based AI/ML, WTRU-A 715 may inform its capabilities to 5GC during registration or any other procedure. Such a registration may be from WTRU-A 715 to (R)AN 725 and AMF 735. For example, during initial registration and/or mobility registration, WTRU-A 715 may include information regarding its support on PC5 based AI/ML, supported AI/ML operation and models, e.g., support Image recognition, support of PC5 based AI/ML splitting, etc. If there is any policy or configuration on PC5 based Al/ML managed by 5GC, WTRU-A 715 may report its status received policy or configuration on PC5 based AI/ML. The status may include whether WTRU-A 715 has any saved policy or configuration on PC5 based Al/ML or the version of policy or configuration on it.

When WTRU-A 715 provides its capability supporting PC5 based Al/ML operation, WTRU-A 715 may provide capabilities in terms of detail information, for example its processing capacity, maximum data rates. For example, the capability can be the parameters to indicate that WTRU-A 715 is in "capable of PC5 AI/ML splitting operation" and WTRU-A 715 may process some "Al/ML model" in "X GHz processing power", "processing delay Y msec". For example, the capability may indicate that WTRU -A 715is capable of "PC5 AI/ML model sharing" within "[1s -1min] latency" for AI/ML models of a "maximal size of [100-500] MB".

At 720, AMF 735 may provide WTRU-A 715 capability to PCF 745. When receiving WTRU-A 715 capability and/or the status on PC5 based AI/ML, AMF 735 may inform the network function handling WTRU-A 715 policy and/or configuration on PC5 based AI/ML, e.g., PCF 745, of this information. AMF 735 may provide the location of WTRU-A 715.

Additionally or alternatively, when AMF 735 is aware that WTRU-A 715 may enter some area (e.g., interested area requested by PCF 745, or area in which an AI/ML service is available), AMF 735 may inform the network function handling the policy and/or configuration on PC5 based AI/ML of WTRU-A 715, e.g. PCF 745, of the location of WTRU-A 715.

AMF 735 may consider the capability of WTRU-A 715 for PC5 based AI/ML with specific conditions such as data rate, link qualities, etc. AMF 735 may refer to a gNB or a NWDAF to determine the condition of WTRU-A 715 may be satisfied or expected to satisfied for the PC5 based Al/ML operation. When WTRU-A 715 is able to support local Al/ML service and/or PC5 based AI/ML, AMF 735 may inform a network function to handle the policy of WTRU-A 715 and/or configuration on the AI/ML service.

At 730, PCF 745 may decide to update the configuration of WTRU-A 715 on PC5 based AI/ML operation. PCF 745 may determine the availability of local service with PC5 based AI/ML in the WTRU'A configuration update request may be sent from PCF 745 to AMF 735 at 740. At 730-740, PCF 745 or other responsible NF may decide to update the configuration or policy of WTRU-A 715 on PC5 based Al/ML operation for example because of new availability of Al/ML service in the location of WTRU-A 715 or updated configuration on AI/ML service. PCF 745 may send a configuration update request to AMF 735 at 740. The configuration update request may include policy or configuration information on PC5 based Al/ML service such as available application relating to PC5 AI/ML service, available area information associated to the application, discovery code used to discover other WTRU supporting the PC5 based AI/ML service, supported AI/ML operation, e.g., AI/ML splitting, and/or supported Al/ML model.

At 750, when AMF 735 receives the configuration update request at 740, AMF 735 may send WTRU-A 715 a WTRU configuration update request including the configuration and/or policy update information received at 740.

At 760, after receiving the WTRU configuration rpdate Request message including the configuration and/or policy update information, WTRU-A 715 discover availability of some application using Al/ML and availability PC5 based AI/ML. If WTRU-A 715 decides to use ProSe service for the PC5 based AI/ML, WTRU-A 715 may discover other WTRUs (such as WTRU-B 705) supporting the PC5 based AI/ML using discovery code and any application relating information in the received configuration message.

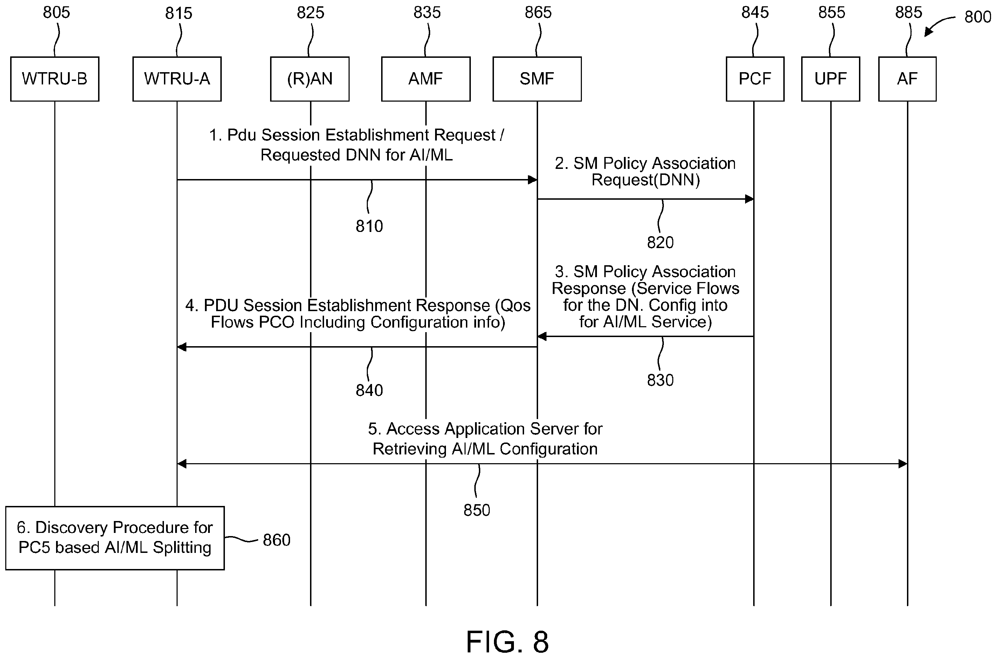

FIG. 8 illustrates a signaling diagram 800 for local AI/ML and PC5 based AI/ML during PDU session setup. A WTRU configuration procedure using PDU session establishment may be used. Diagram 800 includes a WTRU-A 815, a WTRU-B 805, AMF 835, PCF 845, SMF 865, UPF 855, AF 885 and a (R)AN 825 communicatively coupled for the signaling described below.

At 810, WTRU-A 815 provides a PDU session establishment request to SMF 865. The PDU session establishment request may include a requested DNN for AI/ML. WTRU-A 815 may send PDU session establishment request with requested DNN which is assigned for traffic exchange for some AI/ML application, e.g., based on URSP rule, based on dedicated DNN for Al/ML application, or based on configuration information from 5GS per location.

At 820, SMF 865 may signal PCF 845 with an SM policy association request. When SMF 865 receives the PDU Session Establishment Request with the Requested DNN at 810, SMF 865 may send SM Policy Association Request to the PCF for WTRU-A 815 and the requested DNN to PCF 845.

At 830, when PCF 845 receives SM Policy Association Request for WTRU-A 815 and the requested DNN at 820, PCF 845 may reply with SM Policy Association Response including service flows information for application and data which WTRU-A 815 is authorized to use over the DNN. PCF 845 may include application related information for the associated Al/ML services to the DNN in SM Policy Association Response. The application related information may include for example application identifiers for the AI/ML services and application server address which WTRU-A 815 may retrieve any configuration information for the application. Additionally or alternatively, other NF may provide configuration information for the application associated with the DNN by request from PCF 845 or SMF 865.

At 840, SMF 865 may reply to WTRU-A 815 with PDU Session establishment Response with QoS flows for the authorized application and/or services to be used at the DNN and configuration information for the application which may be received from PCF 845 at 830 or from another Network Function.

At 850, after receiving PDU session establishment response in 840, WTRU-A 815 may access application server 885 to retrieve configuration information for the application to be used over the DNN. The configuration information may include AI/ML model information, supported Al/ML service operation information, e.g., AI/ML splitting and/or PC5 based AI/ML service, supported PC5 based AI/ML service, ProSe information for the PC5 based AI/ML service including discovery code.

At 860, after retrieving configuration information at 850 for the PC5 based Al/ML service from application server 885, when WTRU-A 815 uses PC5 based Al/ML service, e.g., AI/ML splitting, WTRU-A 815 may try to discover the WTRU (such as WTRU-B 805) supporting PC5 based Al/ML service in configuration information from AF 885.

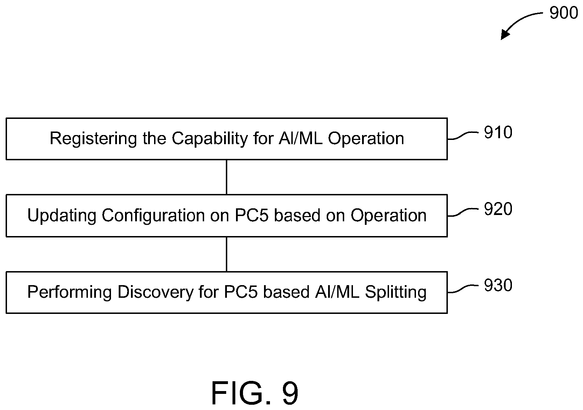

FIG. 9 illustrates a method 900 of dynamic WTRU configuration for Local Al/ML service. Method 900 includes registering the capability for AI/ML operation at 910. At 920, method 900 includes updating the configuration on PC5 based operation. At 930, method 900 includes performing discovery for PC5 based AI/ML splitting.

Dynamic AI/ML splitting negotiation between a WTRU and a AF with consideration of the availability of PC5 based Al/ML and Server based AI/ML is described herein. As will be described in greater detail below, the WTRU and AI/ML Application server negotiate the AI/ML splitting point with expected performance of PC5 based AI/ML and communication performance analytic information. AI/ML An application server or 5GS may trigger discovery procedure for PC5 based AI/ML service and ask report of expected performance of PC5 based Al/ML. When the WTRU is triggered for Al/ML splitting, the WTRU may try to discover any WTRU supporting PC5 based AI/ML splitting. After checking availability of PC5 based AI/ML splitting, the WTRU may measure expected performance of AI/ML operation using PC5 based AI/ML based on the performance data of the discovered WTRU.

After measuring expected performance, the WTRU may negotiate AI/ML splitting with AI/ML server. When deciding the splitting point, the WTRU and Application server may consider the expected AI/ML performance including PC5 based AI/ML as the WTRU's expected performance.

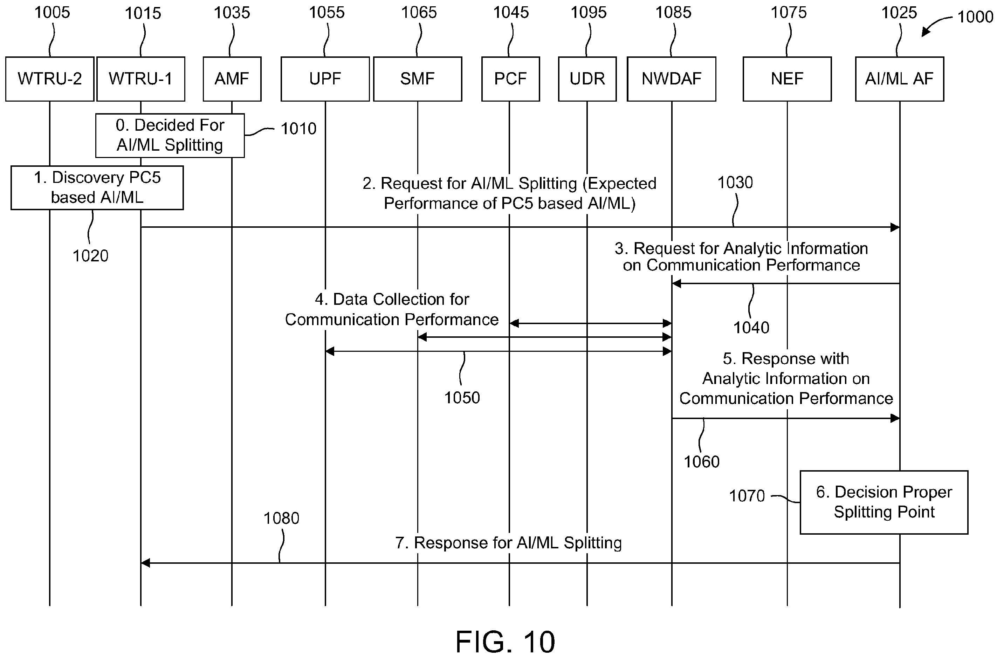

FIG. 10 illustrates a signaling diagram 1000 for an AI/ML splitting negotiation with network analytics. Diagram 1000 includes a WTRU-1 1015, a WTRU-2 1005, AMF 1035, PCF 1045, SMF 1065, UPF 1055, UDR 1095, NWDAF 1085, NEF 1075 and a AI/ML AF 1025 communicatively coupled for the signaling described below.

At 1010, signaling diagram 1000 includes WTRU-1 1015 may decide that it is appropriate to perform AI/ML splitting for at least one Al/ML service in use.

At 1020, when WTRU-1 1015 is aware PC5 based Al/ML service available, WTRU-1 1015 attempts to discover the WTRU's (such as WTRU-2 1005) supporting PC5 based AI/ML service. Based on WTRU-2 1005 capability information and supported Al/ML model information, WTRU-1 1015 may derive expected performance value of PC5 based Al/ML.

At 1030, WTRU-1 1015 may send a request for AI/ML splitting to AI/ML AF 1025. WTRU-1 1015 may include expected performance of PC5 based AI/ML operation which available for WTRU-1 1015 and any discovered WTRU's information for the PC5 based Al/ML operation.

At 1040, after receiving AI/ML splitting request via request 1030, AI/ML AF1025 may request 5GC (NWDAF 1085 or NEF 1075) to provide any analytic information for communication performance for WTRU-1 1015.

At 1050, when 5GC, e.g., NWDAF 1085 or NEF 1075, receives analytic information request from AI/ML AF 1025, 5GC may request data relating to the WTRU to the relevant network function, e.g. SMF 1065, UPF 1055.

At 1060, after gathering data, 5GC, e.g., NWDAF 1085 or NEF 1075, may derive analytic information relating to the communication performance for WTRU-1 1015 as requested by AF 1025 and inform the analytic result to the AI/ML AF 1025.

At 1070, Al/ML AF 1025 may decide AI/ML splitting point based on the analytic information from 5GC and expected performance of PC5 based Al/ML from WTRU-1 1015. Based on the WTRU's expected performance and NW's analytic data on the WTRU's communication performance, Al/ML AF may decide proper splitting point for AI/ML splitting. For example, based on WTRU-1 1015 communication performance, the delay for sending splitting data is greater than the processing delay of PC5 based AI/ML operation based on expected performance of PC5 based AI/ML, AI/ML AF 1025 may decide to let WTRU-1 1015 take responsibility on more computing layers for Al/ML operation.

At 1080, AI/ML AF 1025 may provide an AI/ML splitting response to WTRU-1 1015 with recommended AI/ML splitting operation.

Alternatively, or additionally, 5GC may use a Network Function (here a Al/ML Assistance Function) for determining AI/ML Splitting between WTRU and AI/ML AF 1025. In this case, AI/ML AF 1025 may request the recommendation on Al/ML Splitting operation to AI/ML Assistance Function at 1040. AI/ML AF 1025 may inform expected performance of PC5 based AI/ML of WTRU-1 1015 to the AI/ML Assistance Function. AI/ML Assistance Function may request analytic information to another NF in 5GC at 1040. After receiving analytic information, Al/ML Assistance Function may determine recommended AI/ML Splitting point at 1060 and inform the result to the AI/ML AF 1025 at 1060.

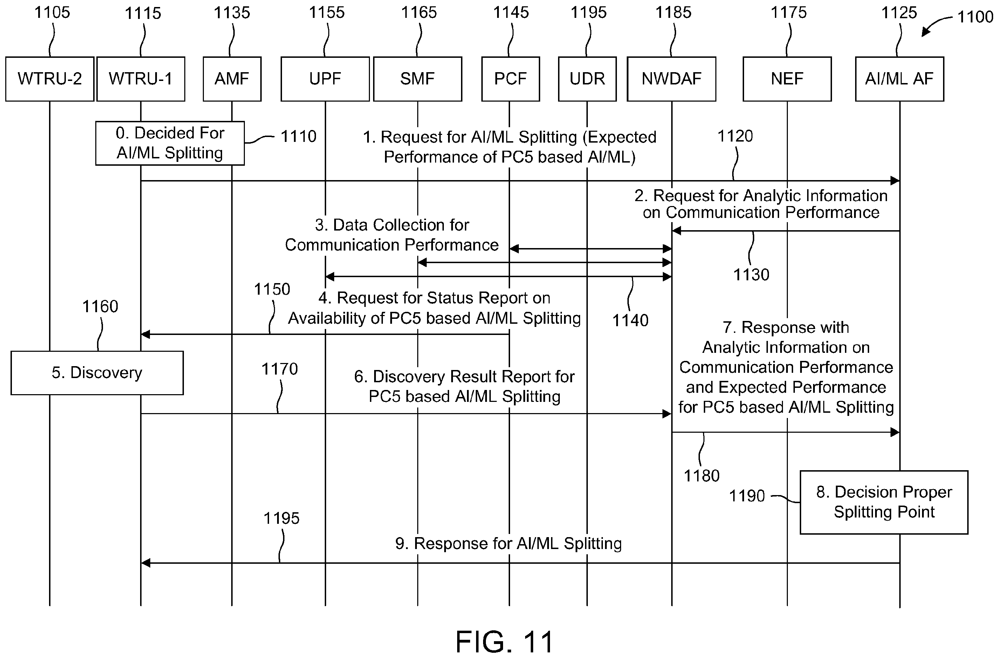

FIG. 11 illustrates a signaling diagram 1100 for an Al/ML splitting negotiation with availability report for PC5 based AI/ML. The AI/ML splitting negotiation procedure with network triggered PC5 based AI/ML discovery may be used. Diagram 1100 includes a WTRU-1 1115, a WTRU-2 1105, AMF 1135, PCF 1145, SMF 1165, UPF 1155, UDR 1195, NWDAF 1185, NEF 1175 and a AI/ML AF 1125 communicatively coupled for the signaling described below.

At 1110, signaling diagram 1100 includes WTRU-1 1115 may decide that it is appropriate to perform AI/ML splitting for at least one AI/ML service in use.

At 1120, WTRU-1 1115 may request Al/ML splitting to AI/ML AF 1125. This request may include expected performance of PC5 based Al/ML.

At 1130, after receiving AI/ML splitting request at 1120, AI/ML AF 1125 request the 5G core network (referred to as 5GC) (e.g. NWDAF 1185 or NEF 1175) to provide any analytic information for communication performance for WTRU-1 1115.

At 1140, when 5GC (e.g. NWDAF 1185 or NEF 1175), receives analytic information request from AF 1125 at 1130, 5GC (e.g. NWDAF 1185 or NEF 1175) may request data relating to the WTRU to the relevant Network Function, e.g., SMF 1165, UPF 1155, PCF 1145.

At 1150, when WTRU-1 1115 is available for PC5 based AI/ML splitting, 5GC, e.g., PCF 1145 may send a request for a status report on the availability of PC5 based AI/ML splitting to WTRU-1 1115. The status report may be requested by controlling network function, for example PCF1145 or NWDAF1185

At 1160, after receiving a request for a status report on availability of PC5 based Al/ML splitting at 1150, WTRU-1 1115 may try to discover any WTRU supporting PC5 based AI/ML splitting.

At 1170, based on the discovered WTRU's (such as WTRU-2 1105's) capability information and supported AI/ML model information, WTRU-1 1115 may derive expected performance value of PC5 based AI/ML. WTRU-1 1115 may send the discovery result report for PC5 based Al/ML splitting with expected performance and/or discovered WTRU's information to PC5 1145 or NWDAF 1185 as a response to 1150.

At 1180, NWDAF 1185 may derive analytic information relating to the communication performance for WTRU-1 1115 as requested by AF and send the analytic result to AI/ML AF 1125. 5GC may include the status report of PC5 based Al/ML including expected performance value.

At 1190, Al/ML AF 1125 may decide AI/ML splitting point based on the analytic information from 5GC and expected performance of PC5 based AI/ML. That is, AI/ML AF (which is an external entity) received information from 5GC, such as NEF 1175 or NWDAF 1185, for example. For example, based on WTRU-1 1115's communication performance, the delay for sending splitting data is greater than the processing delay of PC5 based AI/ML operation based on expected performance of PC5 based AI/ML, AI/ML AF 1125 may decide to let WTRU-1 1115 take responsibility on more computing layers for AI/ML operation.

At 1195, AI/ML AF 1125 may provide an AI/ML splitting response to WTRU-1 1115 with the recommended AI/ML splitting operation.

Alternatively, or additionally, 5GC may use Network Function (such as the AI/ML Assistance Function) for determining AI/ML splitting between WTRU-1 1115 and AI/ML AF 1125. In this case, AI/ML AF 1125 may request the recommendation on Al/ML splitting operation to Al/ML Assistance Function at 1130. The Al/ML Assistance Function may request analytic information to another NEF 1175 in 5GC at 1130. After receiving analytic information including communication performance analytic information and expected performance of PC5 based AI/ML, AI/ML Assistance Function may determine recommended Al/ML splitting point at 1180 and inform the result to AI/ML AF 1125 at 1180.

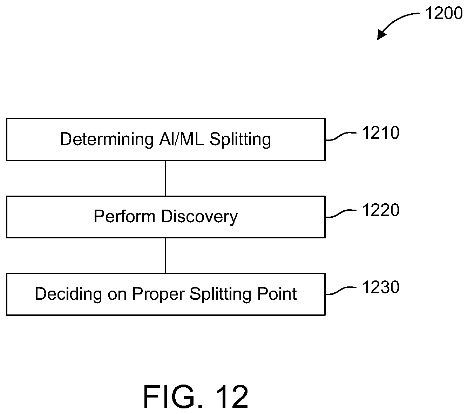

FIG. 12 illustrates a method 1200 for dynamic Al/ML splitting negotiation between a WTRU and a AF considering availability of PC5 based AI/ML and Server based AI/ML. At 1210, method 1200 includes determining the AI/ML splitting. At 1220, method 1200 includes performing discovery associated with the AI/ML splitting. At 1230, method 1200 includes deciding on the proper splitting point for the AI/ML splitting.

A complementary splitting decision between the AS and the WTRU may be used. In some scenarios, particularly if the PC5 assistance is to be handled by the network / WTRU and may be transparent to the Application server, it may be beneficial and useful to have the WTRU to be part of the splitting point decision, along with the server. The splitting process is understood and the focus is directed to the 5GS manages this complementary splitting process. For example, in a simple scenario, the application server may decide AI/ML splitting point between AS and WTRU-A such that AS handles layer 16-24 and the WTRU handles layers 1-15. The AS does not necessarily know that PC5 is used and does not handle that in this case.

The WTRU, to aid with its task (layers 1-15) may initiate PC5 discovery and PC5 assisted AI/ML so that the layers 1-15 are split. The WTRU may perform a local split of its own part (layers 1-15) between the WTRU and other assisting WTRUs. The network may aid the WTRU by providing PC5 information such as discovery code, without having the AS to be involved in the PC5 aspect. This might be suboptimal use case but beneficial, as sometimes some applications do not need to be aware of PC5 aspect when performing Model split Al/ML operation. This may be referred to the Al/ML Splitting decision performed at a first stage by AS as a broad or AS-initiated Splitting decision and the UE side AI/ML splitting decision as local or WTRU-initiated splitting decision.

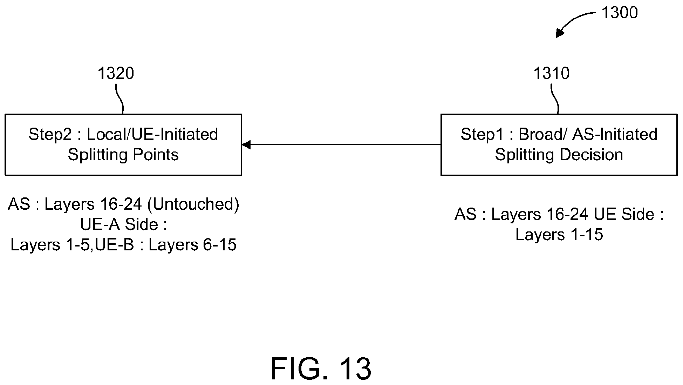

FIG. 13 illustrates a diagram 1300 of two-stage AI/ML Splitting process example. FIG. 13 illustrates an example of process of Al/ML splitting point decision. At first AI/ML Application server may decide to perform Al/ML operation from layer 16 to layer 24 at application server and UE to perform layer 1 to 15 at step 1 1310, for example. Based on this, AI/ML model including layer 1 to 15 may be distributed to the WTRUs. After this decision, WTRU may decide to perform further AI/M L operation splitting among WTRUs by using PC5 based Al/ML cooperation. For example, WTRU-A may perform 1 - 5 and WTRU- B may perform layer 6 - 15 at step 2 1320. Based on this splitting decision WTRU-A and WTRU-B may be shared with Al/ML model including layer1-5 and layer 6~15.

In the example, diagram 1300 illustrates a broad / AS initiated splitting decision at 1310 and a local / WTRU initiated splitting decision at 1320. Based on AS initiated splitting decision, it may be decided that AS performs Al/ML operation including layers 16-24 and the WTRU performs Al/ML operation including layers 1-15. Based on AS initiated splitting decision, proper Al/ML model including layer 1 - 15 may be shared to the WTRU. After receiving the AS initiated splitting decision, at 1320, a local / WTRU initiated splitting points may be utilized. For example, based on WTRU initiated splitting decision, it may be decided that the AS with layers 16-24 remain unchanged from 1310, and WTRU-A perform AI/ML operation including layers 1-5 and WTRU-B perform Al/ML operation including layers 6-15.

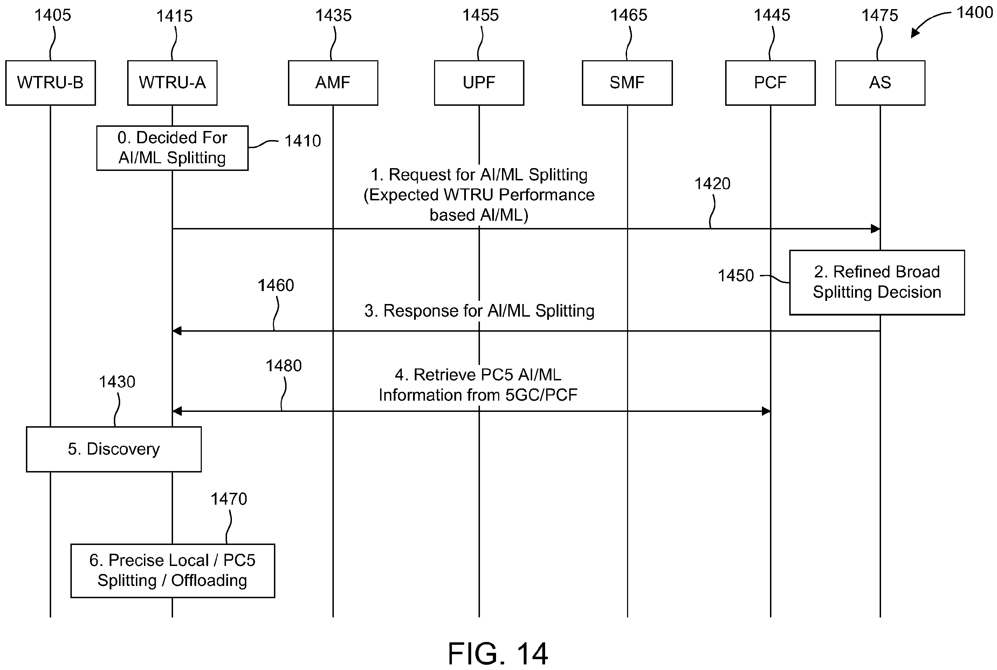

FIG. 14 illustrates a signaling diagram 1400 for an AI/ML splitting complementary splitting procedure. Diagram 1400 includes a WTRU-A 1415, a WTRU-B 1405, AMF 1435, UPF 1455, SMF 1465, PCF 1445 and AS 1475 communicatively coupled for the signaling described below.

At 1410, diagram 1400 includes WTRU-A 1415 decide that AI/ML splitting is beneficial for some Al/ML service in use. For example, WTRU-A 1515 may want to initiate AI/ML splitting using a certain service.

At 1420, WTRU-A 1515 may send a request for AI/ML splitting to AS 1475. The request 1420 may include an expected WTRU performance based AI/ML, for example.

At 1450, AS 1475 may perform a refined broad splitting decision. For example, AS 1475 may decide Al/ML splitting point based on the expected performance from WTRU-A 1515. For example, AS 1475 may process layers 16-24 and WTRU side processes layers 1-15. AS 1475 may use analytics information from the 5GC network (not shown in this figure for simplicity).

At 1460, AS 1475 may signal a response for AI/ML splitting to WTRU-A 1415. This response may include a broad AI/ML splitting operation.

At 1480, WTRU-A 1415 may retrieves PC5 information from PCF 1445. This PC5 information may be information related to the AI/ML operation, such as discovery codes, for example.

At 1430, when WTRU-A 1415 is aware of a PC5 based AI/ML service being available, WTRU-A 1415 may attempt to discover WTRUs (such as WTRU-B 1405) supporting PC5 based AI/ML service.

At 1470, based on WTRU-B's 1405 capability information and supported Al/ML model information, WTRU-A 1415 may further include WTRU-B 1405 in the AI/ML operation by further splitting WTRU side layers.

In a second scenario, WTRU-A 1415 may make its own local splitting decision separate from AS 1475, for example. WTRU-A 1415 may provide to AS 1475 information including aggregate information and performance expectation (such as, without providing PC5 related information of other WTRUs to AS 1475) in advance. For example, if WTRU-A 1415 informs AS 1475 that it has more capacity (after checking with available devices in proximity), WTRU-A 1415 may send a new expected performance and AS 1475 may provide WTRU-A 1415 with more layers to process (such as layer 1-20 to process). WTRU-A 1415 may use its own local splitting decision mechanism to further split this decision to the discovered WTRUs.

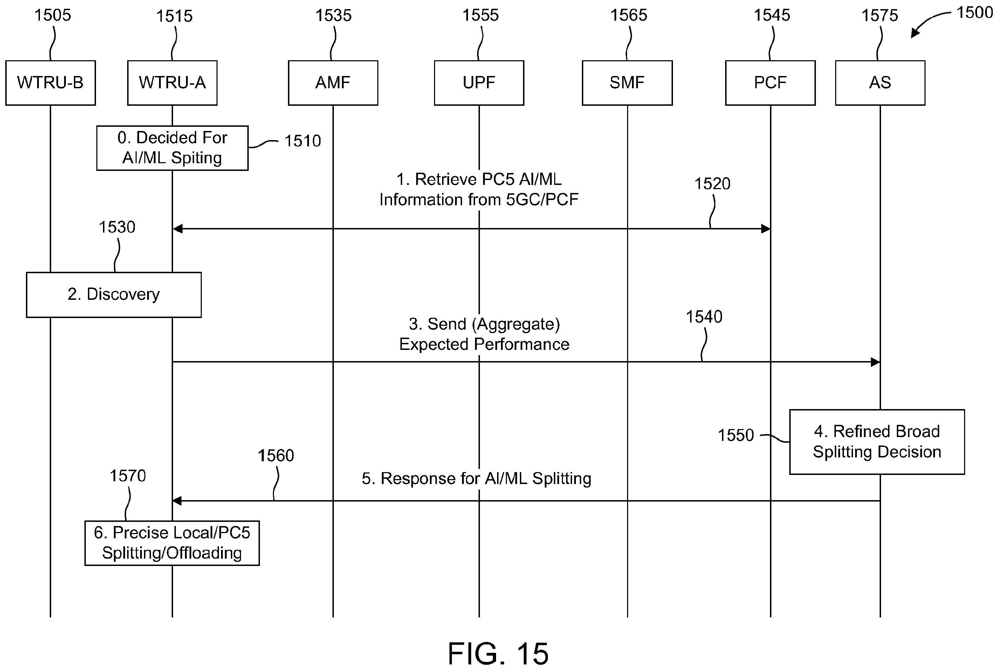

FIG. 15 illustrates a signaling diagram 1500 for AI/ML splitting complementary splitting procedure that is enhanced with aggregate information. Diagram 1500 includes a WTRU-A 1515, a WTRU-B 1505, AMF 1535, UPF 1555, SMF 1565, PCF 1545 and AS 1575 communicatively coupled for the signaling described below.

At 1510, diagram 1500 includes WTRU-A 1515 decide that AI/ML splitting is beneficial for some AI/ML service in use. For example, when WTRU-A 1515 is experiencing a bad communication situation and is attempting to send large amounts of data to an Al/ML Application server for AI/ML operation, WTRU-A 1515 may decide to perform Al/ML splitting to reduce the required radio resource to send the result to the AI/ML AS 1575 to be sent to the AI/ML Application server.

For example, without Al/ML splitting WTRU-A 1515 may need to send the result to AI/ML AS 1575 even though there is bad channel quality. With Al/ML splitting WTRU-A 1515 may send a partial result to WTRU-B 1505 and WTRU-B 1505 may perform the remaining AI/ML task(s). WTRU-B 1505 may send the result to AI/ML AS 1575 with better channel quality than WTRU-A 1515.

At 1520, PCF 1545 communicates with WTRU-A 1515 to retrieve PC5 AI/ML information from 5GC / PCF. At 1530, WTRU-A 1515 performs discovery for additional WTRUs, such as WTRU-B 1505, for example. At 1520 and 1530, when WTRU-A 1515 is aware of a PC5 based Al/ML service being available, WTRU-A 1515 may attempt to discover WTRUs (such as WTRU-B 1505) supporting PC5 based Al/ML service. Based on WTRU-B's 1505 capability information and supported Al/ML model information, WTRU-A 1515 may derive an expected performance value of PC5 based AI/ML.

At 1540, WTRU-a 1515 may send or aggregate expected performance to AS 1575. For example, WTRU-A 1515 may request AI/ML splitting to AI/ML Application Function with an aggregate performance indication. For example, aggregated computing power and available memory of discovered WTRUs are good enough to perform AI/ML operation of some layers by comparing transmission delay of raw data for performing AI/ML operation of some layers in the server, WTRU-A 1515 may request AI/ML splitting operation to the AI/ML application function with indicating the aggregated computing power and available memory.

At 1550, AS 1575 may perform a refined broad splitting decision. The AI/ML AF may decide the AI/ML splitting point based on the analytic information from 5GC and expected performance from WTRU-A 1515. For example, AS 1575 may process layers 21-24 and WTRU side layers 1-20.

At 1560, AS 1575 may respond with a response for AI/ML splitting to WTRU-A 1515 with a recommended AI/ML splitting operation.

At 1570, WTRU-A 1515 may perform a local AI/ML splitting mechanism based on the received information from AS 1575, to split the layers between the WTRUs, such as the WTRU (WTRU-B 1505) discovered already at 1530, for example.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random-access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method performed by a first wireless transmit receive unit, WTRU, the method comprising:
transmitting a discovery solicitation message to a second WTRU;
receiving from the second WTRU a discovery response message, the discovery response message including an identification of an AI/ML model;
configuring a direct connection with the second WTRU based on the discovery response message; and
negotiating an AI/ML split between the first WTRU and the second WTRU.

2. The method of claim 1, wherein the direct connection is a PC5 connection.

3. The method of any of claims 1 to 2, wherein the discovery solicitation message allows for selection of a device for Al/ML.

4. The method of any of claims 1 to 3, wherein the device is selected based on the discovery response message.

5. The method of any of claims 1 to 4, wherein the device is the second WTRU.

6. The method of any of claims 1 to 5, wherein the negotiated split is based on an expected performance of the first WTRU.

7. The method of any of claims 1 to 6, wherein the negotiated split is based on performance data of the first WTRU.

8. A first wireless transmit and receive unit, WTRU, comprising:
a processor; and
a transceiver communicatively coupled to the processor, the processor and transceiver configured to:
transmit a discovery solicitation message to a second WTRU;
receive from the second WTRU a discovery response message, the discovery response message including an identification of an AI/ML model;
configure a direct connection with the second WTRU based on the discovery response message; and
negotiate an AI/ML split between the first WTRU and the second WTRU.

9. The WTRU of claim 8 or method of claim 1, wherein the discovery solicitation message includes a discovery code for PC5 based AI/ML and a performance class for Al/ML.

10. The WTRU of any of claims 8 to 10 or method of any of claims 1 to 7, wherein the discovery response message further includes a performance class and target user information.

11. The WTRU of any of claims 8 to 10, wherein the direct connection is a PC5 connection.

12. The WTRU of any of claims 8 to 11 or the method of any of claims 1 to 7, wherein the processor and transceiver are further configured to perform a registration procedure capable of providing a capability indication for splitting.

13. The WTRU of any of claims 8 to 12 or the method of any of claims 1 to 7, wherein the processor and transceiver are further configured to determine availability of local service in an area of the WTRU for use in the splitting.

14. The WTRU of any of claims 8 to 13, wherein the negotiated split is based on an expected performance of the first WTRU or performance data of the first WTRU.

15. The WTRU of any of claims 8 to 14 or the method of any of claims 1 to 7, wherein the configured connection is configured based on a performance class for Al/ML.

## Patentansprüche

1. Verfahren, das durch eine erste Drahtlos-Sende- und -Empfangseinheit (Wireless Transmit/Receive Unit, WTRU) durchgeführt wird, wobei das Verfahren umfasst:
Senden einer Discovery-Solicitation-Nachricht an eine zweite WTRU;
Empfangen, von der zweiten WTRU, einer Discovery-Response-Nachricht, wobei die Discovery-Response-Nachricht eine Identifikation eines KI/ML-Modells enthält;
Konfigurieren einer direkten Verbindung mit der zweiten WTRU auf der Grundlage der Discovery-Response-Nachricht; und
Negoziieren einer KI/ML-Aufteilung zwischen der ersten WTRU und der zweiten WTRU.

2. Verfahren nach Anspruch 1, wobei die direkte Verbindung eine PC5-Verbindung ist.

3. Verfahren nach einem der Ansprüche 1 und 2, wobei die Discovery-Solicitation-Nachricht die Auswahl einer Vorrichtung für KI/ML ermöglicht.

4. Verfahren nach einem der Ansprüche 1 bis 3, wobei die Vorrichtung auf der Grundlage der Discovery-Response-Nachricht ausgewählt wird.

5. Verfahren nach einem der Ansprüche 1 bis 4, wobei die Vorrichtung die zweite WTRU ist.

6. Verfahren nach einem der Ansprüche 1 bis 5, wobei die negoziierte Aufteilung auf einer erwarteten Leistung der ersten WTRU basiert.

7. Verfahren nach einem der Ansprüche 1 bis 6, wobei die negoziierte Aufteilung auf Leistungsdaten der ersten WTRU basiert.

8. Erste Drahtlos-Sende- und -Empfangseinheit (Wireless Transmit/Receive Unit, WTRU), umfassend:
einen Prozessor; und
einen Sender-Empfänger, der kommunikativ mit dem Prozessor gekoppelt ist, wobei der Prozessor und der Sender-Empfänger eingerichtet sind zum:
Senden einer Discovery-Solicitation-Nachricht an eine zweite WTRU;
Empfangen, von der zweiten WTRU, einer Discovery-Response-Nachricht, wobei die Discovery-Response-Nachricht eine Identifikation eines KI/ML-Modells enthält;
Konfigurieren einer direkten Verbindung mit der zweiten WTRU auf der Grundlage der Discovery-Response-Nachricht; und
Negoziieren einer KI/ML-Aufteilung zwischen der ersten WTRU und der zweiten WTRU.

9. WTRU nach Anspruch 8 oder Verfahren nach Anspruch 1, wobei die Discovery-Solicitation-Nachricht einen Discovery-Code für PC5-basiertes KI/ML und eine Leistungsklasse für KI/ML enthält.

10. WTRU nach einem der Ansprüche 8 bis 10 oder Verfahren nach einem der Ansprüche 1 bis 7, wobei die Discovery-Response-Nachricht des Weiteren eine Leistungsklasse und Zielnutzerinformationen enthält.

11. WTRU nach einem der Ansprüche 8 bis 10, wobei die direkte Verbindung eine PC5-Verbindung ist.

12. WTRU nach einem der Ansprüche 8 bis 11 oder Verfahren nach einem der Ansprüche 1 bis 7, wobei der Prozessor und der Sender-Empfänger des Weiteren dazu eingerichtet sind, ein Registrierungsprocedere durchführen, das in der Lage ist, eine Fähigkeitenangabe für die Aufteilung bereitzustellen.

13. WTRU nach einem der Ansprüche 8 bis 12 oder Verfahren nach einem der Ansprüche 1 bis 7, wobei der Prozessor und der Sender-Empfänger des Weiteren dazu eingerichtet sind, die Verfügbarkeit eines lokalen Dienstes in einem Gebiet der WTRU zur Verwendung bei der Aufteilung zu bestimmen.

14. WTRU nach einem der Ansprüche 8 bis 13, wobei die negoziierte Aufteilung auf einer erwarteten Leistung der ersten WTRU oder auf Leistungsdaten der ersten WTRU basiert.

15. WTRU nach einem der Ansprüche 8 bis 14 oder Verfahren nach einem der Ansprüche 1 bis 7, wobei die konfigurierte Verbindung auf der Grundlage einer Leistungsklasse für KI/ML konfiguriert ist.

## Revendications

1. Procédé réalisé par une première unité émettrice-réceptrice sans fil, WTRU, le procédé comprenant :
la transmission d'un message de sollicitation de découverte à une deuxième WTRU ;
la réception, depuis la deuxième WTRU, d'un message de réponse de découverte, le message de réponse de découverte incluant une identification d'un modèle AI/ML ;
la configuration d'une connexion directe avec la deuxième WTRU sur la base du message de réponse de découverte ; et
la négociation d'une séparation AI/ML entre la première WTRU et la deuxième WTRU.

2. Procédé selon la revendication 1, dans lequel la connexion directe est une connexion PC5.

3. Procédé selon l'une quelconque des revendications 1 et 2, dans lequel le message de sollicitation de découverte permet une sélection d'un dispositif pour AI/ML.

4. Procédé selon l'une quelconque des revendications 1 à 3, dans lequel le dispositif est sélectionné sur la base du message de réponse de découverte.

5. Procédé selon l'une quelconque des revendications 1 à 4, dans lequel le dispositif est la deuxième WTRU.

6. Procédé selon l'une quelconque des revendications 1 à 5, dans lequel la séparation négociée est basée sur une performance attendue de la première WTRU.

7. Procédé selon l'une quelconque des revendications 1 à 6, dans lequel la séparation négociée est basée sur des données de performance de la première WTRU.

8. Première unité émettrice-réceptrice sans fil, WTRU, comprenant :
un processeur ; et
un émetteur-récepteur couplé en communication au processeur, le processeur et l'émetteur-récepteur étant configurés pour :
transmettre un message de sollicitation de découverte à une deuxième WTRU ;
recevoir, depuis la deuxième WTRU, un message de réponse de découverte, le message de réponse de découverte incluant une identification d'un modèle AI/ML ;
configurer une connexion directe avec la deuxième WTRU sur la base du message de réponse de découverte ; et
négocier une séparation AI/ML entre la première WTRU et la deuxième WTRU.

9. WTRU selon la revendication 8 ou procédé selon la revendication 1, dans lequel le message de sollicitation de découverte inclut un code de découverte pour AI/ML basé sur PC5 et une classe de performance pour AI/ML.

10. WTRU selon l'une quelconque des revendications 8 et 10 ou procédé selon l'une quelconque des revendications 1 à 7, dans lequel le message de réponse de découverte inclut en outre une classe de performance des informations d'utilisateur cible.

11. WTRU selon l'une quelconque des revendications 8 à 10, dans laquelle la connexion directe est une connexion PC5.

12. WTRU selon l'une quelconque des revendications 8 à 11 ou procédé selon l'une quelconque des revendications 1 à 7, dans lequel le processeur et l'émetteur-récepteur sont en outre configurés pour réaliser une procédure d'enregistrement capable de fournir une indication de capacité pour la séparation.

13. WTRU selon l'une quelconque des revendications 8 à 12 ou procédé selon l'une quelconque des revendications 1 à 7, dans lequel le processeur et l'émetteur-récepteur sont en outre configurés pour une disponibilité d'un service local dans une zone de la WTRU pour son utilisation dans la séparation.

14. WTRU selon l'une quelconque des revendications 8 à 13, dans laquelle la séparation négociée est basée sur une performance attendue de la première WTRU ou sur des données de performance de la première WTRU.

15. WTRU selon l'une quelconque des revendications 8 à 14 ou procédé selon l'une quelconque des revendications 1 à 7, dans lequel la connexion configurée est configurée sur la base d'une classe de performance pour AI/ML.
